# EUROPÄISCHE PATENTSCHRIFT

(11) **EP 3 153 721 B1**
(45) Veröffentlichungstag und Bekanntmachung des Hinweises auf die Patenterteilung: **05.12.2018**
(21) Anmeldenummer: 16186091.1
(22) Anmeldetag: 29.08.2016
(51) Int. Cl.: F16B 12/24, F16B 12/20

(54) **DUEBELANORDNUNG FUER EINE VORRICHTUNG ZUM VERBINDEN ZWEIER MOEBELELEMENTE**
DOWEL ASSEMBLY FOR A DEVICE FOR CONNECTING TWO FURNITURE ELEMENTS
CHEVILLE POUR UN DISPOSITIF DESTINE A RELIER DEUX ELEMENTS DE MEUBLE

(30) Priorität: 08.10.2015 DE 202015105329 U
(43) Veröffentlichungstag der Anmeldung: 12.04.2017
(73) Patentinhaber: Grass GmbH, 6973 Höchst (AT)
(72) Erfinder: KARU, Felix, 6844 Altach (AT); MITTWOCH, Stephan, 6950 Dornbirn (AT)
(74) Vertreter: Otten, Roth, Dobler & Partner mbB Patentanwälte

(56) Entgegenhaltungen:
- WO-A1-96/22436
- WO-A1-2008/046477
- DE-A1- 4 124 727
- DE-U1- 9 216 182
- US-A1- 2011 030 172

## Beschreibung

Die Erfindung betrifft eine Dübelanordnung für eine Verbindungseinrichtung zum Verbinden zweier Möbelelemente nach dem Oberbegriff des Anspruchs 1, eine Verbindungseinrichtung zum Verbinden zweier Möbelelemente mit einer Dübelanordnung, sowie ein Möbelteil mit einer Verbindungseinrichtung.

### Stand der Technik

Eine bekannte Vorrichtung zum Verbinden zweier Möbelelemente umfasst neben einer Dübelanordnung ein Gehäuse, an welchem ein Zugmechanismus ausgebildet ist. Die Dübelanordnung weist an einem ersten Ende ein Zugelement und am gegenüber angeordneten zweiten Ende ein Dübelelement auf.

Die Dübelanordnung ist mit dem Dübelelement in eine Bohrung des zweiten Möbelelements eingesetzt und wird in diesem montierten Zustand mit dem Zugelement in das Gehäuse der Vorrichtung eingeschoben, welches am ersten Möbelelement angeordnet ist. Bei Aktivierung des Zugmechanismus wird die Dübelanordnung und damit das zweite Möbelelement in Richtung des Gehäuses bzw. in Richtung des ersten Möbelelements gezogen und die beiden Möbelelemente somit miteinander verbunden.

Nachteilig ist dabei, dass das Dübelelement aus der Bohrung des zweiten Möbelelements durch die axiale Zugkraft des Zugmechanismus auf das Zugelement in unerwünschter Weise herausgelöst werden kann. Die Patentdokumente WO2008046477A1, WO9622436A1 und US20010030172A1 offenbaren solche Dübelanordnungen.

### Aufgaben und Vorteile der Erfindung

Der Erfindung liegt die Aufgabe zu Grunde, die Verankerungswirkung der Dübelanordnung zu verbessern.

Diese Aufgabe wird durch die Merkmale des Anspruchs 1 gelöst.

In den abhängigen Ansprüchen sind vorteilhafte und zweckmäßige Ausführungsformen der Erfindung angegeben.

Die Erfindung geht von einer Dübelanordnung für eine Verbindungseinrichtung zum Verbinden zweier Möbelelemente aus, wobei in einem Gehäuse der Verbindungseinrichtung ein Zugmechanismus ausgebildet ist, wobei die Dübelanordnung ein Zugelement, wie einen Verbindungsbolzen oder ein Schraubelement, und ein Dübelelement umfasst, wobei das Dübelelement an einem ersten Ende des Zugelements angeordnet ist, wobei das Gehäuse am ersten Möbelelement und das Zugelement mit seinem ersten Ende im montierten Zustand am zweiten Möbelelement angeordnet ist, wobei das Zugelement zum Verbinden der beiden Möbelelemente mit seinem zweiten Ende in das Gehäuse der Verbindungseinrichtung einsetzbar ist.

Die Verbindungseinrichtung zum Verbinden zweier Möbelelemente kann in bekannter Art und Weise als Verbindungsbeschlag, zum Beispiel als Frontbodenverbinder einer Schublade, ausgestaltet sein.

Vorteilhaft ist das erste Möbelelement als Schubladenboden und das zweite Möbelelement als Schubladenfront ausgebildet.

Ein Möbelelement ist beispielsweise aus Holz, vorteilhaft als ein MDF-Plattenmaterial oder aus Kunststoff oder einer Kombination der Materialien hergestellt.

Der Zugmechanismus der Verbindungseinrichtung ist beispielweise als exzentrisch wirkendes Montageorgan ausgestaltet.

Der wesentliche Aspekt der Erfindung ist nun darin zu sehen, dass die Dübelanordnung neben dem Dübelelement und dem Zugelement ein zusätzliches Verankerungselement aufweist.

Durch die Ausgestaltung der Dübelanordnung mit einem zusätzlichen Verankerungselement wird die Verbindungswirkung der Dübelanordnung zwischen dem ersten Ende des Zugelements der Dübelanordnung und dem zweiten Möbelelement verstärkt.

Hierdurch kann die Dübelanordnung nur mit einer vergleichsweise größeren Kraft im montierten Zustand, insbesondere einer vergleichsweise größeren axial wirkenden Zugkraft, aus dem zweiten Möbelelement gezogen werden.

Das Dübelelement der Dübelanordnung ist bevorzugt aus einem Kunststoff ausgestaltet und kann insbesondere in einem Spritzgießverfahren kostengünstig hergestellt werden.

Erfindungsgemäß ist das Verankerungselement, im montierten Zustand an der Dübelanordnung, in das Dübelelement eingesetzt.

In einer vorteilhaften Ausführungsform ist das Verankerungselement am ersten Ende des Zugelements angeordnet.

Beispielsweise ist das erste Ende des Zugelements verstärkt gegenüber einem stiftförmigen Verbindungsabschnitt der beiden Enden des Zugelements ausgebildet, beispielsweise kugelförmig, mit einem größeren Kugelradius als der Radius des stiftförmigen Verbindungsabschnitts.

Vorteilhaft ist das Verankerungselement im montierten Zustand an der Dübelanordnung am verstärkten kugelförmigen ersten Ende des Zugelements anstehend und/oder anliegend angeordnet.

Durch die Anordnung des Verankerungselements am verstärkten ersten Ende des Zugelements im Dübelelement ist vorteilhaft eine vergleichsweise starke Verbindung der Dübelanordnung mit dem zweiten Möbelteil im montierten und aktivierten Zustand der Verbindungseinrichtung erzielbar. Insbesondere ist die Verbindung zwischen Dübelanordnung und zweitem Möbelteil, bei axial wirkender Zugkraft auf die Dübelanordnung, verbessert.

Erfindungsgemäß umfasst das Verankerungselement ein Sicherungsorgan.

Das Sicherungsorgan ist beispielsweise axial abstehend am Verankerungselement ausgebildet.

Das Sicherungsorgan ist vorteilhaft als eine elastische Fahne, beispielsweise als ein Metallstreifen, ausgebildet und axial abstehend, entlang der Verbindungsachse der beiden Enden des Zugelementes, am Verankerungselement angeordnet.

Durch die Ausbildung des Sicherungsorgans als elastische Fahne kann sich die Dübelanordnung durch eine auf sie wirkende axiale Zugkraft mit dem zweiten Möbelteil verbinden. Beispielsweise steht durch die Wirkung der axialen Zugkraft aufgrund der Ausbildung der Dübelanordnung die elastische Fahne in radialer Richtung vom Zugelement ab und/oder wird abgespreizt und verbindet sich mit dem zweiten Möbelteil, zum Beispiels derart, dass die elastische Fahne in oder an das Material des zweiten Möbelteils gedrückt wird.

In einer bevorzugten Weise ist die elastische Fahne mit einem schmalen ersten Ende im Bereich des ersten Endes des Zugelements im montierten Zustand der Dübelanordnung am Dübelelement und/oder am Zugelement angeordnet und ein zweites schmales Ende der elastischen Fahne ist in Richtung zweites Ende des Zugelements axial abstehend bzw. in radialer Richtung abstehend am Dübelelement und/oder am Zugelement ausgebildet.

Das Sicherungsorgan ist erfindungsgemäß als Spreizelement ausgebildet.

Beispielsweise ist das Sicherungsorgan als abspreizbares Federelement ausgebildet.

Darüber hinaus ist es von Vorteil, wenn das Sicherungsorgan die Dübelanordnung, welche am zweiten Möbelteil in ein Verankerungsloch eingesetzt ist, derart ausgebildet ist, dass bei Aktivierung des Zugmechanismus das Spreizelement in einer radialen Richtung in die Seitenflächen des Verankerungsloches gedrückt und/oder abgespreizt wird und zum Beispiel in die Seitenflächen eindringt.

Hierdurch ist die Kraft, welche notwendig ist, um die Dübelanordnung, insbesondere bei aktiviertem Zugmechanismus aus dem zweiten Möbelteil zu ziehen bzw. vom zweiten Möbelteil zu entfernen, erhöht.

Mehrere Sicherungsorgane können vorteilhaft kreisförmig, insbesondere gleichmäßig beabstandet, am Verankerungselement ausgebildet sein.

Durch die Ausgestaltung des Verankerungselements mit mehreren Sicherungsorganen wird die Verbindungswirkung der Dübelanordung mit dem zweiten Möbelteil weiter verbessert.

In einer vorteilhaften Ausgestaltung der Erfindung umfasst das Verankerungselement vier Sicherungsorgane.

Vorteilhaft erweist sich auch, dass das Verankerungselement ein ringförmiges Sicherungselement aufweist, an welchem ein Sicherungsorgan angeordnet ist.

In einer vorteilhaften Ausgestaltung der Dübelanordnung ist das Verankerungselement kronenartig mit einem Sicherungselement als "Kronreif" und mit Sicherungsorganen als "Kronenzacken" ausgestaltet.

Das Sicherungselement kann als Ring oder als Schelle ausgestaltet sein.

Vorteilhafterweise ist das Verankerungselement aus einem Metall ausgebildet, beispielsweise aus Stahl oder einem Blech, insbesondere aus einem Stahlblech.

Das Verankerungselement kann auch aus einem Kunststoff oder einer Kombination der vorgenannten Materialien ausgebildet sein.

Insbesondere ist das Verankerungselement ein Biege- und/oder Stanzteil.

Weiter wird vorgeschlagen, dass das Dübelelement ein Führungsorgan zur Führung eines Sicherungsorgans umfasst.

Vorteilhafterweise ist das Führungsorgan am Dübelelement derart ausgestaltet, dass das Sicherungsorgan, bei Aktivierung des Zugmechanismus, durch das Führungsorgan abgespreizt und geführt in die Seitenfläche des Verankerungslochs gedrückt wird und/oder in diese eindringt.

In einer vorteilhaften Variante der Erfindung ist eine Dübelanordnung derart ausgestaltet, dass sich ein Sicherungsorgan des Verankerungselementes nach Aktivierung des Zugmechanismus der Verbindungseinrichtung in einer Wirkposition befindet.

Auch ist es von Vorteil, dass das Zugelement ein Anlageorgan für das Verankerungselement aufweist.

Das Verankerungselement wird bei der Montage der Dübelanordnung beispielsweise am zweiten Ende des Zugelementes auf das Zugelement in axialer Richtung aufgefädelt und entlang einer Längsachse des Zugelementes in Richtung des ersten Endes des Zugelementes bis zum Anlageorgan des Zugelementes geschoben und kann dann mit seinem Sicherungselement am Anlageorgan anstehen.

Vorstellbar ist auch, dass das Sicherungselement als Schelle ausgebildet ist und das Verankerungselement dann radial zur Längsachse des Zugelementes auf das Zugelement geklipst und/oder gesteckt wird und in einem weiteren Montageschritt bis zum Anlageorgan des Zugelementes in Axialrichtung geschoben wird.

In einer überdies vorteilhaften Ausgestaltung der Erfindung weist das Dübelelement ein Federorgan auf und das Federorgan ist verformbar.

Durch die vorteilhafte Ausgestaltung des Dübelelements mit einem Federorgan kann das Verankerungselement im montierten Zustand der Verbindungseinrichtung bei Aktivierung des Zugmechanismus das Federorgan derart elastisch und/oder plastisch verformen, dass es eine Wirkposition einnimmt und eine Wirkverbindung, insbesondere eine dübelartige Wirkverbindung, mit dem zweiten Möbelelement eingeht. Hierdurch wird die Verbindungswirkung vorteilhaft zusätzlich verstärkt.

### Beschreibung des Ausführungsbeispiels

Anhand der nachstehenden schematischen Zeichnungen werden Ausführungsbeispiele unter Angabe weiterer Einzelheiten und Vorteile näher erläutert.

Es zeigen:
- Figur 1: eine Explosionsdarstellung einer erfindungsgemäßen Dübelanordnung,
- Figur 2: eine perspektivische Ansicht der Dübelanordnung aus Figur 1,
- Figur 3: eine seitliche Teilansicht eines Schnitts durch ein erstes Ende der Dübelanordnung aus Figur 1 mit einem transparent dargestellten Dübelelement,
- Figuren 4 bis 6: eine seitliche Ansicht auf das erste Ende der Dübelanordnung nach Figur 1 in unterschiedlichen Aktivierungszuständen eines Verankerungselements,
- Figur 7: eine perspektivische Ansicht auf eine Verbindungseinrichtung zum Verbinden zweier Möbelelemente mit einer Dübelanordnung und
- Figur 8: eine perspektivische Ansicht auf ein Möbelteil mit einer Schublade mit einer Verbindungseinrichtung.

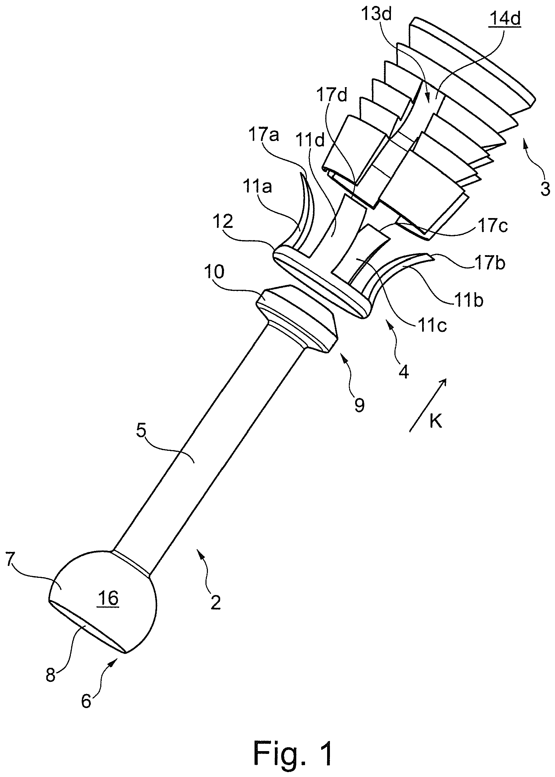

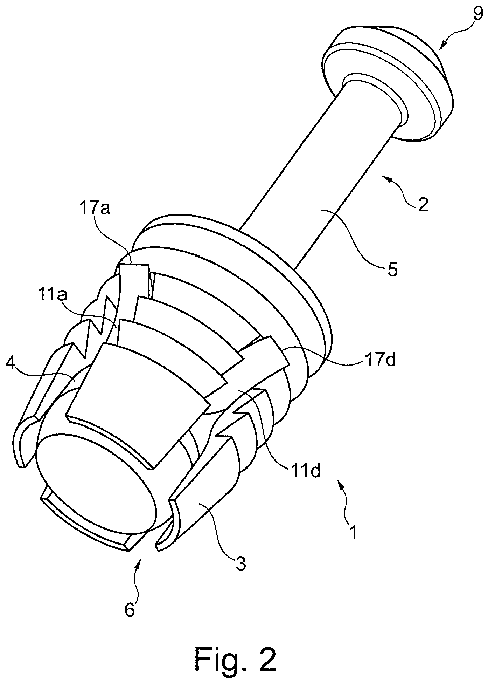

Die Figuren 1,2 zeigen eine Dübelanordnung 1 bestehend aus einem Zugelement 2, einem Dübelelement 3 und einem Verankerungselement 4.

Das Dübelelement 3 ist an seiner Außenseite hauptsächlich in einer tannenbaumartigen Kontur ausgebildet.

Das Zugelement 2 ist als bolzenartiger Stift 5 ausgestaltet und weist an einem ersten Ende 6 einen kugelförmigen Kopf 7 auf, wobei der Kopf 7 an der dem Stift 5 entgegen gesetzten Seite 8 abgeflacht ist. Das dem Kopf 7 gegenüberliegende Ende 9 des Zugelementes 2 ist als ein kegelartiges Zugorgan 10 mit abgeflachter Spitze ausgebildet, welches einen größeren maximalen Radius aufweist als der Stift 5 und einen kleineren maximalen Radius als der Kopf 7. Hierdurch kann ein Zugmechanismus 15 das Zugorgan 10 auf der dem Stift 5 zugewandten Seite hintergreifen und bei Aktivierung eine axial wirkende Zugkraft K auf das Zugelement 2 ausüben.

Am Verankerungselement 4 sind fahnen- bzw. federartige Sicherungsorgane 11a - 11d in Form von z.B. streifenförmigen Blechelementen ausgebildet, welche in axialer Richtung zum Stift 5 des Zugelementes 2 mit ihrem ersten schmalen Ende am insbesondere ringförmigen Sicherungselement 12 des Verankerungselementes 4 angeordnet sind. Das gegenüberliegende zweite schmale Ende der Sicherungsorgane 11a - 11d ist leicht radial nach außen abstehend ausgebildet. Zusätzlich verringert sich vorzugsweise die Dicke der Sicherungsorgane 11a - 11d in Richtung des zweiten Endes derart, dass die Sicherungsorgane 11a - 11d am zweiten Ende vorteilhaft z.B. scharfe Kanten 17a - 17d aufweisen.

Im montierten Zustand des Verankerungselements 4 am Zugelement 2 liegt das Verankerungselement 4 mit seinem Sicherungselement 12 an einem Anlageorgan 16 an, welches insbesondere als Kugeloberfläche des Kopfs 7 ausgebildet ist. Der Kopf 7 besitzt dabei einen größeren Außendurchmesser, als der Innendurchmesser des ringförmigen Sicherungselements 12.

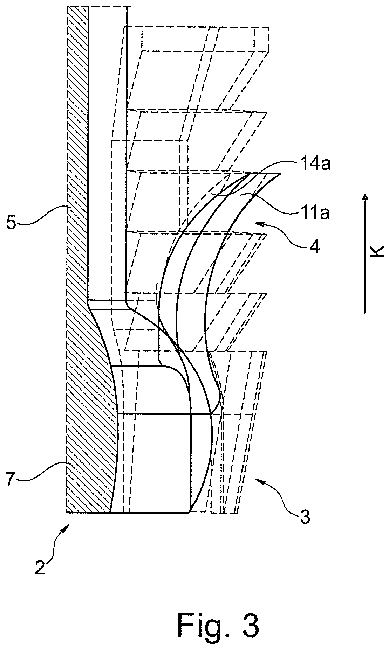

Außerdem werden die Sicherungsorgane 11a - 11d im zusammengesetzten Zustand der Dübelanordnung 1 durch Anlageflächen 14a - 14d der Führungsorgane 13a - 13d, welche am Dübelelement 3 ausgestaltet sind, geführt (in den Figuren 1- 6 ist jeweils nur ein Teil der Anlageflächen 14a - 14d bzw. der Führungsorgane 13a - 13d gezeigt). Hierzu wird bei der Montage der Dübelanordnung 1 das Dübelelement 3 zum Verankerungselement 4 entsprechend positioniert.

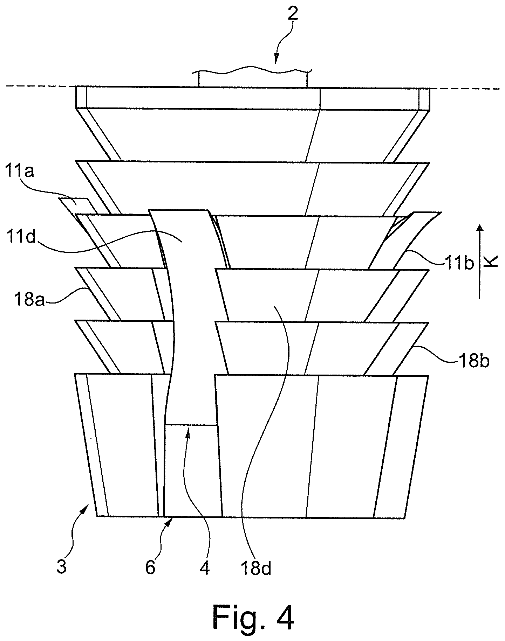

In den Figuren 4 bis 6 ist der Ablauf einer Verformung von Federorganen 18a - 18d (nicht vollständig dargestellt) des Dübelelements 3 und der Sicherungsorgane 11a - 11d bei Aktivierung des Zugmechanismus 15 einer Verbindungseinrichtung 19, welche in einem zweiten Möbelteil angeordnet ist, gezeigt.

Bei Aktivierung des Zugmechanismus 15 wird eine Zugkraft K auf das Zugelement 2 in axialer Richtung zum Stift 5 und in Richtung des zweiten Endes 9 der Dübelanordnung 1 ausgeübt.

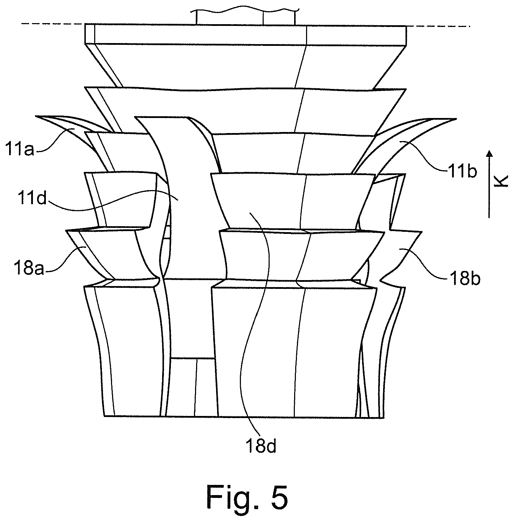

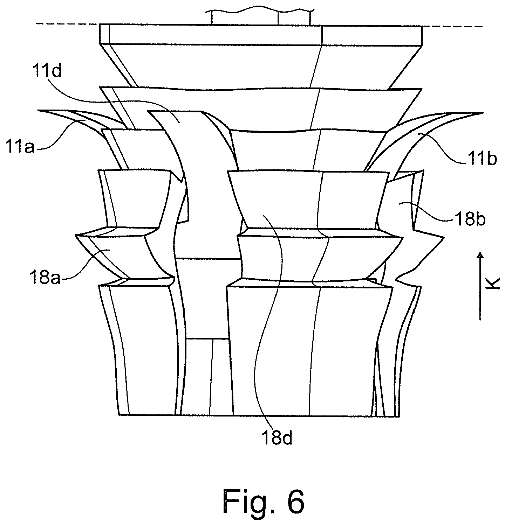

Figur 4 zeigt die Startstellung der Federorgane 18a - 18d und der Sicherungsorgane 11a - 11d vor der Verformung (nicht vollständig dargestellt). Figur 5 zeigt eine Mittelstellung der Dübelanordnung 1 im Verformungsverlauf und Figur 6 zeigt die Endstellung der Verformung der Federorganen 18a - 18d und der Sicherungsorgane 11a - 11d.

In der Startstellung ist das erste Ende der Dübelanordnung 1, mit an das Zugelement 2 angeordnetem Dübelelement 3 und Verankerungselement 4 in eine Bohrung eines ersten Möbelelements (transparent dargestellt, durch gestrichelte Linien angedeutet) eingesetzt und/oder eingeschlagen. Das Dübelelement 3 ist im eingesetzten Zustand über seine Dübelkontur fest mit dem ersten Möbelelement verbunden. Insbesondere ist das Dübelelement 3 in axialer Richtung des Zugelements 2 fest, vorteilhaft unbeweglich mit dem ersten Möbelelement verbunden. Die Sicherungsorgane 11a - 11d des Verankerungselements 4 stehen mit ihren Kanten 17a - 17d an der Innenseite der Bohrung des ersten Möbelelements an.

In der Mittelstellung ist der Zugmechanismus 15 aktiviert. Durch den Zugmechanismus 15 wird das Zugelement 2 in Richtung der Verbindungseinrichtung 19 bewegt und aufgrund der Anlage des Sicherungselements 12 an der Anlagefläche 16 des Kopfs 7 auch das Verankerungselement 4. Das Dübelelement 3 ist insbesondere in axialer Richtung unbeweglich am ersten Möbelelement verankert.

Die Bewegung des Zugelements 2 und des Verankerungselements 4 verursacht eine elastische Verformung und/oder eine Biegung der Kanten 17a - 17d der Sicherungsorgane 11a - 11d durch die Führungsorgane 13a - 13d in radialer Richtung nach außen. Dadurch werden die Kanten 17a - 17d in die Innenseite der Bohrung hineingedrückt und/oder hineingeschoben, wodurch die Verformung und/oder Biegung der Sicherungsorgane 11a - 11d wiederum zusätzlich unterstützt wird (Figuren 5,6).

Dies führt zu einer vergleichsweise stärkeren Verankerung des ersten Endes 6 der Dübelanordnung 1 in der Bohrung des ersten Möbelteils. Insbesondere können dadurch vergleichsweise große axiale Zugkräfte auf die Dübelanordnung 1 ausgeübt werden, ohne dass die Dübelanordnung 1 mit ihrem ersten Ende 6 aus der Bohrung des ersten Möbelteils gezogen wird.

Die Federorgane 18a - 18d des Dübelelements 3 sind auf ihrer innenliegenden Seite mit einer kegelförmigen Fläche ausgebildet, die sich im montierten Zustand axial in Richtung des zweiten Endes 9 des Zugelements verjüngt und in Richtung des ersten Endes 6 öffnet. Hierdurch kann das Dübelelement 3 auf das erste Ende 6 des Zugelementes 2 über das bereits montierte Verankerungselement 4 geschoben werden. In dieser Startstellung liegen die inneren Seitenflächen der Federorgane 18a - 18d am Sicherungselement 12 des Verankerungselements 4 an (Figur 4).

Bei Aktivierung des Zugmechanismus 15 wird das Sicherungselement 12, durch Anlage am Anlageorgan 16 des Kopfs 7, in Richtung des zweiten Endes 9 des Zugelements 2 geschoben. Hierdurch drückt das Sicherungselement 12 die Federorgane 18a - 18d des Dübelelements 3 in radialer Richtung derart nach außen, dass diese sich elastisch und/oder plastisch verformen. Dadurch werden die Ferderorgane 18a - 18d an und/oder in die Innenseite der Bohrung gedrückt. Das Sicherungselement 12 ist dazu aus einem vergleichsweise festeren, stabileren und/oder härteren Material ausgebildet als die Federorgane 18a - 18d. Die Verformung führt zu einer vergleichsweise stärkeren Verankerung des Dübelelements 3 der Dübelanordnung 1 in der Bohrung des zweiten Möbelteils.

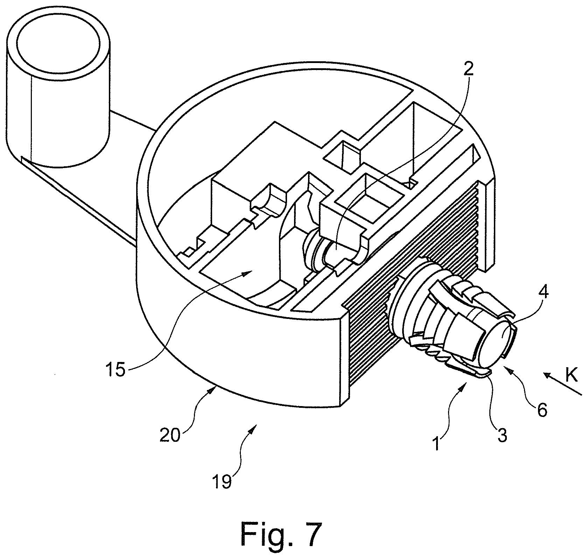

Eine erfindungsgemäße Verbindungseinrichtung 19 umfasst einen Zugmechanismus 15, welcher in einem Gehäuse 20 angeordnet ist und eine Dübelanordnung 1 (Figur 7).

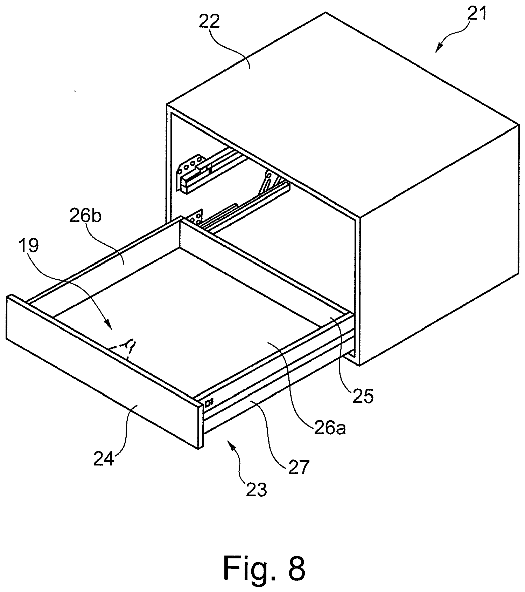

Ein Möbel 21 umfassend ein Möbelkorpus 22 und eine Schublade 23 ist in Figur 8 gezeigt. Die Schublade 23 ist aus einem Frontelement 24, einer Rückwand 25, Seitenwänden 26a, 26b und einem Schubladenboden 27 ausgebildet. Das Gehäuse 20 der Verbindungseinrichtung 19 (gestrichelt dargestellt), welche den Schubladenboden 27 mit dem Frontelement 24 verbindet, ist an der Unterseite des Schubladenbodens 27 angeordnet.

### Bezugszeichenliste:

- 1: Dübelanordnung
- 2: Zugelement
- 3: Dübelelement
- 4: Verankerungselement
- 5: Stift
- 6: Ende
- 7: Kopf
- 8: Seite
- 9: Ende
- 10: Zugorgan
- 11a - d: Sicherungsorgan
- 12: Sicherungselement
- 13a - d: Führungsorgan
- 14a - d: Anlagefläche
- 15: Zugmechanismus
- 16: Anlageorgan
- 17a - d: Kante
- 18a - d: Federorgan
- 19: Verbindungseinrichtung
- 20: Gehäuse
- 21: Möbel
- 22: Korpus
- 23: Schublade
- 24: Frontelement
- 25: Rückwand
- 26a - b: Seitenwand
- 27: Schubladenboden

## Patentansprüche

1. Dübelanordnung (1) für eine Verbindungseinrichtung (19) zum Verbinden zweier Möbelelemente (24, 27), wobei in einem Gehäuse (20) der Verbindungseinrichtung (19) ein Zugmechanismus (15) ausgebildet ist, wobei die Dübelanordnung (1) ein Zugelement (2), wie einen Verbindungsbolzen oder ein Schraubelement, und ein Dübelelement (3) umfasst, wobei das Dübelelement (3) an einem ersten Ende (6) des Zugelements (2) angeordnet ist, wobei das Gehäuse (20) am ersten Möbelelement (27) und das Zugelement (2) mit seinem ersten Ende (6) im montierten Zustand am zweiten Möbelelement (24) angeordnet ist, wobei das Zugelement (2) zum Verbinden der beiden Möbelelemente (24, 27) mit seinem zweiten Ende (9) in das Gehäuse (20) der Verbindungseinrichtung (19) einsetzbar ist, dass die Dübelanordnung (1) neben dem Dübelelement (3) und dem Zugelement (2) ein zusätzliches Verankerungselement (4) aufweist, wobei das Verankerungselement (4) ein Sicherungsorgan (11a - 11d) umfasst und das Sicherungsorgan (11a - 11d) als Spreizelement ausgebildet ist, wobei das Sicherungsorgan (11a - 11d) der Dübelanordnung derart ausgebildet ist, dass bei Aktivierung des Zugmechanismus das Spreizelement (11a - 11d) in eine radiale Richtung gedrückt und/oder abgespreizt wird, **dadurch gekennzeichnet, dass** das Verankerungselement (4) im montierten Zustand an der Dübelanordnung (1) in das Dübelelement (3) eingesetzt ist.

2. Dübelanordnung (1) nach Anspruch 1, **dadurch gekennzeichnet, dass** das Verankerungselement (4) vier Sicherungsorgane (11a - 11d) umfasst.

3. Dübelanordnung (1) nach einem der vorangegangenen Ansprüche, **dadurch gekennzeichnet, dass** das Verankerungselement (4) ein ringförmiges Sicherungselement (12) aufweist, an welchem ein Sicherungsorgan (11a - 11d) angeordnet ist.

4. Dübelanordnung (1) nach einem der vorangegangenen Ansprüche, **dadurch gekennzeichnet, dass** das Verankerungselement (4) aus Metall ausgebildet ist.

5. Dübelanordnung (1) nach einem der vorangegangenen Ansprüche, **dadurch gekennzeichnet, dass** das Dübelelement (3) ein Führungsorgan (13a - 13d) zur Führung des Sicherungsorgans (11a - 11d) umfasst.

6. Dübelanordnung (1) nach einem der vorangegangenen Ansprüche, **dadurch gekennzeichnet, dass** ein Sicherungsorgan (11a - 11d) des Verankerungselements (4) im montierten Zustand der Dübelanordnung (1) nach Aktivierung des Zugmechanismus (15) sich in einer Wirkposition befindet.

7. Dübelanordnung (1) nach einem der vorangegangenen Ansprüche, **dadurch gekennzeichnet, dass** das Zugelement (2) ein Anlageorgan (16) für das Verankerungselement (4) aufweist.

8. Dübelanordnung (1) nach einem der vorangegangenen Ansprüche, **dadurch gekennzeichnet, dass** das Dübelelement (3) ein Federorgan (18a - 18d) aufweist und das Federorgan (18a-18d) verformbar ist.

9. Verbindungseinrichtung (19) zum Verbinden zweier Möbelelemente (24, 27) mit einer Dübelanordnung (1) nach einem der vorangegangenen Ansprüche.

10. Möbelteil (23) mit einer Verbindungseinrichtung (19) nach dem Anspruch 9.

## Claims

1. Dowel assembly (1) for a connecting device (19) for connecting two furniture elements (24, 27), wherein a tensioning mechanism (15) is formed in a housing (20) of the connecting device (19), wherein the dowel assembly (1) comprises a tensioning element (2), such as a connecting bolt or a screw element, and a dowel element (3), wherein the dowel element (3) is arranged at a first end (6) of the tensioning element (2), wherein the housing (20) is arranged on a first furniture element (27) and the tensioning element (2) is arranged with its first end (6) in the mounted state on the second furniture element (24), wherein the tensioning element (2) for connecting the two furniture elements (24, 27) with its second end (9) can be inserted into the housing (20) of the connecting device (19), the dowel assembly (1) in addition to the dowel element (3) and the tensioning element (2) comprises an additional anchoring element (4), wherein the anchoring element (4) comprises a securing element (11a, 11d) and the securing element (11a -11d) is designed as a spreading element, wherein the securing element (11a -11d) of the dowel arrangement is designed such that when activating the tensioning mechanism the spreading element (11a- 11d) is pushed and/or spread in a radial direction, **characterised in that** the anchoring element (4) is inserted into the dowel element (3) in the mounted position on the dowel assembly (1).

2. Dowel assembly (1) according to any of the preceding claims, **characterised in that** the anchoring element (4) comprises four securing elements (11a - 11d).

3. Dowel assembly (1) according to any of the preceding claims, **characterised in that** the anchoring element (4) comprises an annular securing element (12), on which a securing element (11a - 11d) is arranged.

4. Dowel assembly (1) according to any of the preceding claims, **characterised in that** the anchoring element (4) is made of metal.

5. Dowel assembly (1) according to any of the preceding claims, **characterised in that** the dowel element (3) comprises a guiding element (13a - 13d) for guiding the securing element (11a - lid).

6. Dowel assembly (1) according to any of the preceding claims, **characterised in that** a securing element (11a - 11d) of the anchoring element (4) in the assembled position of the dowel assembly (1) is in an active position after activating the tensioning mechanism (15).

7. Dowel assembly (1) according to any of the preceding claims, **characterised in that** the tensioning element (2) comprises an installation member (16) for the anchoring element (4).

8. Dowel assembly (1) according to any of the preceding claims, **characterised in that** the dowel element (3) comprises a spring element (18a - 18d) and the spring element (18a-18d) is deformable.

9. Connecting device (19) for connecting two furniture elements (24, 27) with a dowel assembly (1) according to any of the preceding claims.

10. Furniture part (23) with a connecting device (19) according to claim 9.

## Revendications

1. Système de cheville (1) pour un dispositif de liaison (19) destiné à relier deux éléments de meuble (24, 27), un mécanisme de traction (15) étant formé dans un boîtier (20) du dispositif de liaison (19), le système de cheville (1) comprenant un élément de traction (2), tel qu'un boulon de liaison ou un élément fileté, et un élément cheville (3), l'élément cheville (3) étant disposé à une première extrémité (6) de l'élément de traction (2), le boîtier (20) étant disposé sur le premier élément de meuble (27) et l'élément de traction (2) étant disposé à l'état monté avec sa première extrémité (6) sur le deuxième élément de meuble (24), l'élément de traction (2) pouvant être inséré avec sa deuxième extrémité (9) dans le boîtier (20) du dispositif de liaison (19) pour relier les deux éléments de meuble (24, 27), le système de cheville (1) étant muni, outre de l'élément cheville (3) et de l'élément de traction (2), d'un élément d'ancrage (4) supplémentaire, l'élément d'ancrage (4) comprenant un organe de blocage (11a - 11d) et l'organe de blocage (11a - 11d) étant réalisé comme un élément d'expansion, l'organe de blocage (11a - 11d) du système de cheville étant conçu de telle sorte que, lors de l'activation du mécanisme de traction, l'élément d'expansion (11a - 11d) est poussé et/ou écarté dans une direction radiale, **caractérisé en ce que,** en position montée sur le système de cheville (1), l'élément d'ancrage (4) est inséré dans l'élément chevilles (3).

2. Système de cheville (1) selon la revendication 1, **caractérisé en ce que** l'élément d'ancrage (4) comprend quatre organes de blocage (11a - 11d).

3. Système de cheville (1) selon l'une des revendications précédentes, **caractérisé en ce que** l'élément d'ancrage (4) est muni d'un élément de blocage (12) annulaire sur lequel est disposé un organe de blocage (11a - 11d).

4. Système de cheville (1) selon l'une des revendications précédentes, **caractérisé en ce que** l'élément d'ancrage (4) est réalisé en métal.

5. Système de cheville (1) selon l'une des revendications précédentes, **caractérisé en ce que** l'élément cheville (3) comprend un organe de guidage (13a - 13d) pour guider l'organe de blocage (11a - 11d).

6. Système de cheville (1) selon l'une des revendications précédentes, **caractérisé en ce qu'**à l'état monté du système de cheville (1) et après activation du mécanisme de traction (15), un organe de blocage (11a - 11d) de l'élément d'ancrage (4) se trouve dans une position active.

7. Système de cheville (1) selon l'une des revendications précédentes, **caractérisé en ce que** l'élément de traction (2) est muni d'un organe de butée (16) pour l'élément d'ancrage (4).

8. Système de cheville (1) selon l'une des revendications précédentes, **caractérisé en ce que** l'élément cheville (3) est muni d'un organe ressort (18a - 18d) et l'organe ressort (18a - 18d) est déformable.

9. Dispositif de liaison (19) pour relier deux éléments de meuble (24, 27) avec un système de cheville (1) selon l'une des revendications précédentes.

10. Partie de meuble (23) avec dispositif de liaison (19) selon la revendication 9.
